# EUROPÄISCHE PATENTSCHRIFT

(11) **EP 1 432 627 B1**
(45) Veröffentlichungstag und Bekanntmachung des Hinweises auf die Patenterteilung: **07.06.2006**
(21) Anmeldenummer: 02754126.7
(22) Anmeldetag: 18.09.2002
(51) Int. Cl.: B65G 1/137

(54) **KOMMISSIONIEREINRICHTUNG**
COMMISSIONING DEVICE
DISPOSITIF DE PREPARATION DES COMMANDES

(30) Priorität: 20.09.2001 CH 174101
(43) Veröffentlichungstag der Anmeldung: 30.06.2004
(73) Patentinhaber: Manitec Consulting AG, 6373 Ennetbürgen (CH)
(72) Erfinder: MATHYS, André, CH-6373 Ennetbürgen (CH); KOLLER, Hans, 6048 Horw (CH)
(74) Vertreter: Groner, Manfred
(86) Internationale Anmeldenummer: PCT/CH2002/000513
(87) Internationale Veröffentlichungsnummer: WO 2003/024845

(56) Entgegenhaltungen:
- EP-A- 0 773 187
- US-A- 3 520 427
- US-A1- 2002 021 954
- HEPTNER K HEPTNER K: "METHODEN DER WARENVERTEILUNG UND AUFTRAGSZUSAMMENSTELLUNG IN DER USA.METHODS OF GOODS DISTRIBUTION AND ORDER FILLING IN THE UNITED STATES" FORDERN UND HEBEN, KRAUSSKOPF VERLAG FUR WIRTSCHAFT. MAINZ, DE, Bd. 19, Nr. 12, 1. September 1969 (1969-09-01), Seiten 727-732, XP000670542 ISSN: 0341-2636
- JONG DE A K: "ORDERVERZAMEL-TRUCKS (2)" TRANSPORT EN OPSLAG, ELSEVIER BEDRIJSINFORMATIE, DOETINCHEM, NL, Bd. 13, Nr. 7, 23. Juni 1989 (1989-06-23), Seiten 44-47, XP000009142 ISSN: 0165-330X

## Beschreibung

Die Erfindung betrifft eine Kommissioniereinrichtung nach dem Oberbegriff des Anspruchs 1.

Im Stand der Technik sind zahlreiche Kommissioniereinrichtungen bekannt geworden, die einen oder mehrere Kommissionier-Arbeitsplätze aufweisen. Die Behälter gelangen über einen Kommissionierkreislauf zum Kommissionier-Arbeitsplatz. Sind die Lagerbehälter am Kommissionier-Arbeitsplatz angekommen, so werden einem Kommissionierer das Behälterfach, aus dem die Artikel zu entnehmen sind, die Anzahl der zu kommissionierenden Einheiten sowie die Zielstelle angezeigt. Hat der Kommissionierer die entsprechenden Artikel dem Lagerbehälter entnommen, so wird dieser zurück ins Lager gefördert und dort wieder in ein entsprechendes Fach eingelagert.

Die US-A-3,520,427 offenbart eine Kommissioniereinrichtung mit einem Rollentisch und einer höhenverstellbaren Plattform für eine Bedienungsperson. Der Rollentisch ist ebenfalls höhenverstellbar und dient zur Aufnahme von Behältern, die einem Gestell entnommen werden. Die Behälter werden direkt vom Gestell auf den Rollentisch und wieder zurück verschoben.

Durch die EP 0 847 939 ist eine Kommissioniereinrichtung bekannt geworden, bei welcher Langsamläufer und Schnellläufer vorgesehen sind, die entsprechenden Durchlaufkanälen zugeführt werden, welche endlose Fördervorrichtungen aufweisen.

Kommissioniereinrichtungen sollen zeitsparend und funktionssicher arbeiten. Zudem soll der Kommissionier-Arbeitsplatz so ausgebildet sein, dass er den Kommissionierer körperlich entlastet. Bei den bisher bekannten Kommissioniereinrichtungen werden die Lagerbehälter dem Kommissionieren auf einer Fördervorrichtung, beispielsweise einem Förderband präsentiert. Einerseits sind solche Fördereinrichtungen aufwändig und andererseits ist eine Anpassung des Kommissionier-Arbeitsplatzes an die unterschiedlichen Bedürfnisse der Kommissionierer nicht möglich.

Der Erfindung liegt die Aufgabe zu Grunde, eine Kommissioniereinrichtung der genannten Gattung zu schaffen, die bei einfachem Aufbau eine höhere Leistung und ergonomische Kommissionierung ermöglicht.

Die Aufgabe ist bei einer gattungsgemässen Kommissioniereinrichtung gemäss Anspruch 1 gelöst.

Die Lagerbehälter werden zu einem Tisch gebracht, der verstellbar ist. Der Tisch kann an die Bedürfnisse des Kommissionierers angepasst werden. Der Kommissionier-Arbeitsplatz ist dann besonders ergonomisch, wenn gemäss einer Weiterbildung der Erfindung der Tisch in seiner Neigung und/oder Höhe verstellbar ist.

Der Tisch wird mittels eines Antriebs zyklisch von einer Beladeposition in eine Entnahmeposition und von dieser in eine Entladeposition bewegt, wobei der Tisch in der Beladeposition vom Fahrzeug mit dem Behälter beladen wird.

Ein solcher zyklischer Ablauf kann so erfolgen, dass der Tisch in der Beladeposition im Wesentlichen horizontal und in der Entnahmeposition geneigt ausgerichtet ist. Der Kommissionier-Arbeitsplatz kann mit mehreren Übergabeplätzen ausgebildet werden. Das Fahrzeug kann dann beispielsweise vier Lagerbehälter abgeben und anschliessend vier abgearbeitete Lagerbehälter aufnehmen. Dies ist insbesondere dann möglich, wenn gemäss einer Weiterbildung der Erfindung wenigstens zwei übereinander angeordnete Tische vorgesehen sind, die jeweils wenigstens zwei Lagerbehälter aufnehmen können. Wesentlich ist auch, dass bei einer solchen Anordnung die Lagerbehälter für den Kommissionierer in unmittelbarer Reichweite vorliegen. Der Kommissionierer muss somit nicht grosse Strecken zurücklegen, was ihn körperlich we- sentlich entlastet.

Nach einer Weiterbildung der Erfindung ist das Fahrzeug mit einer Greifvorrichtung versehen, mit welcher die Lagerbehälter am Kommissionier-Arbeitsplatz und am Behälterfach ein- und ausgelagert werden können. Solche Greifvorrichtungen ermöglichen ein sehr schnelles und sicheres Bewegen der Lagerbehälter. Ein Wechsel beim Kommissionier-Arbeitsplatz ist dann besonders schnell und sicher möglich. Als Führungsbeispiel der erfindungsgemässen Kommissioniereinrichtung wird nachfolgend anhand der Zeichnung näher erläutert.

Es zeigen:
- **Fig.1**: schematisch ein Kommissionier-Arbeitsplatz sowie eine Teilansicht eines Lagers,
- **Fig.2**: schematisch zwei Kommissionier-Arbeitsplätze sowie eine Teilansicht eines Lagers,
- **Fig.3**: schematisch eine Ansicht auf eine erfindungsgemässe Kommissioniereinrichtung,
- **Fig.4**: schematisch eine Ansicht eines Tisches sowie der Antriebsvorrichtung für diesen Tisch, wobei der Tisch sich in der Beladeposition befindet,
- **Fig. 5**: schematisch eine Ansicht gemäss Fig. 4, jedoch mit dem Tisch in der Entnahmeposition,
- **Fig. 6**: schematisch eine Ansicht gemäss Fig. 4, jedoch mit dem Tisch in der Entladeposition,
- **Fig. 7**: schematisch eine Ansicht des Tisches in Richtung des Pfeils VII der Fig. 6, wobei Teile weggelassen sind,
- **Fig. 8**: schematisch eine Ansicht eines KommissionierArbeitsplatzes wobei zwei Tische übereinander angeordnet sind und
- **Fig. 9**: schematisch eine Ansicht des Regals mit Behältern in der Rücklagenposition.

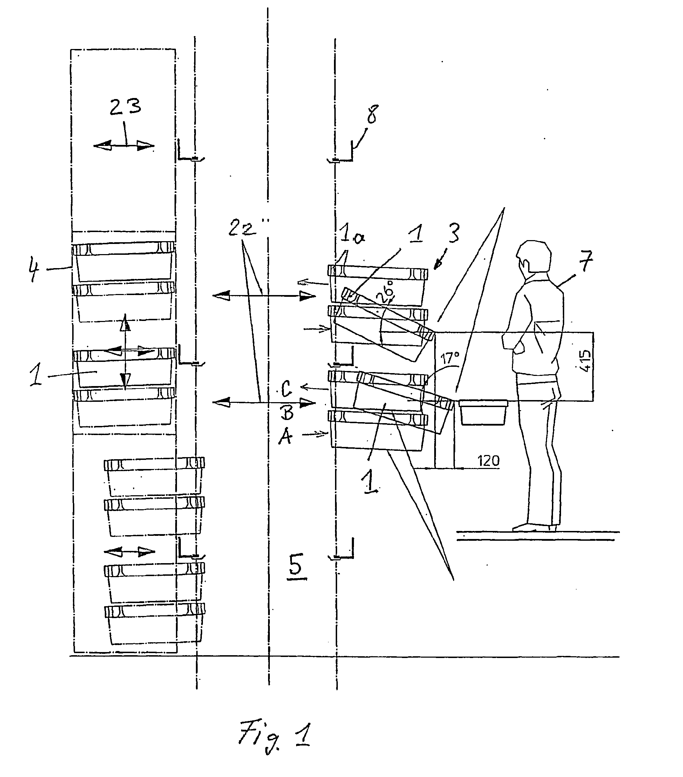

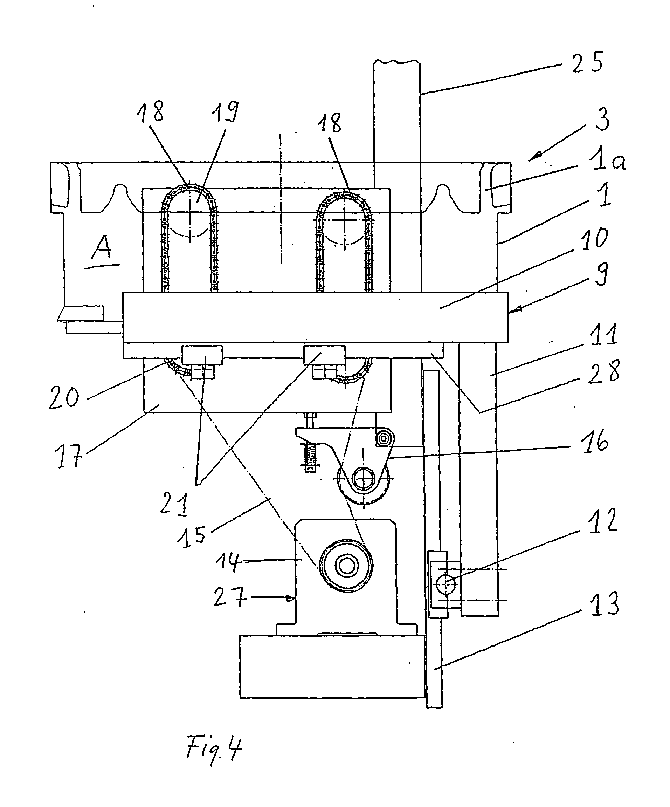

Die **Fig.1** zeigt einen Kommissionierer 7, der einen Kommissionier-Arbeitsplatz 3 bedient, in dem er aus präsentierten Lagerbehältern 1 jeweils eine bestimmte Anzahl Artikel entnimmt. Hinter dem Kommissionier-Arbeitsplatz 3 verläuft ein Lagergang 5, in dem auf Schienen 8 gemäss **Fig. 3** Fahrzeuge 2 horizontal geführt sind. Mit diesen Fahrzeugen 2 wird ein Lager 4 bedient, dass in der Regel eine hohe Anzahl von Behälterfächern 26 aufweist, wie die Figur erkennen lässt. Mit den Fahrzeugen 2 werden Behälter vom Lager 4 zum Kommissionier-Arbeitsplatz 3 und wieder zurück ins Lager 4 transportiert. Mit einem in Figur 3 lediglich angedeuteten Lift 6, können die Fahrzeuge 2 von einer Etage zur anderen gefahren können. Die Fahrzeuge 2 werden von einer hier nicht gezeigten Steuervorrichtung gesteuert, sie werden somit automatisch zu den Behälterfächern 26 und zum Kommissionier-Arbeitsplatz 3 gefahren. Die Lagerbehälter 3 können an sich bekannte Kunststoffbehälter sein, die oben offen sind und Nuten 1a aufweisen, welche den horizontalen Transport der Behälter 1 mittels beispielsweise einer Greifvorrichtung ermöglichen. Grundsätzlich können die Behälter 1 aber auch mit anderen Mitteln bewegt werden.

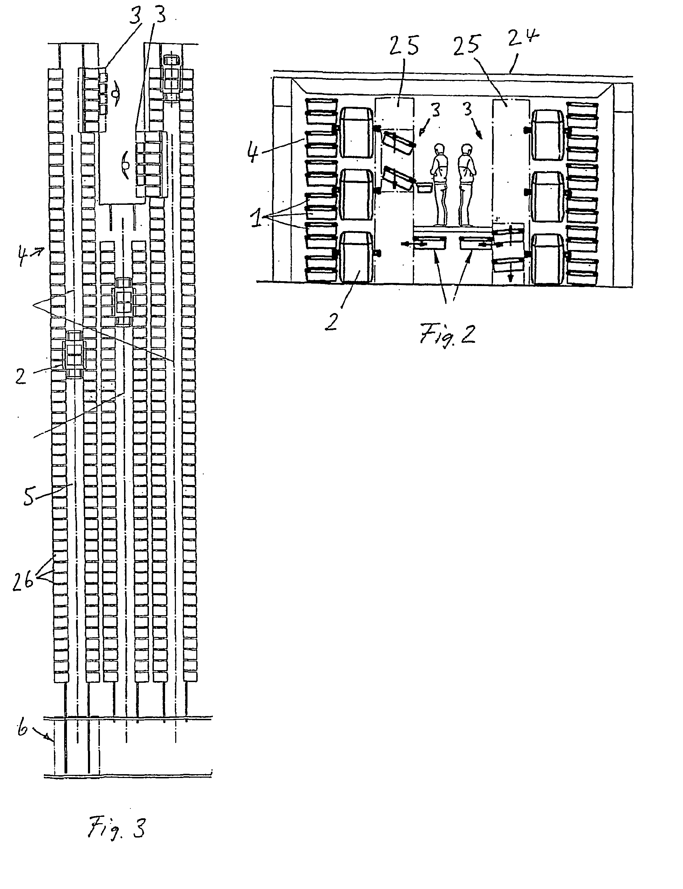

Die **Fig. 2** zeigt in einem Gebäude 24 zwei gegenüber angeordnete Kommissionier-Arbeitsplätze. Das hier angedeutete Lager 4 weist drei Etagen auf, in denen Fahrzeuge 2 horizontal verfahrbar sind. Jedes Fahrzeug 2 ist mit einer hier nicht gezeigten Greifvorrichtung versehen, mit welchen die Lagerbehälter 1 horizontal aufgeladen und entladen werden können. Es wird hierzu auf die WO 01 10751 A 1 verwiesen, in welcher ein geeignetes Fahrzeug sowie eine geeignete Greifvorrichtung offenbart sind. In der Regel kann das Fahrzeug 2 gleichzeitig mehrere Behälter 1 transportieren und aufnehmen bzw. abgeben. Beispielsweise kann jedes Fahrzeug 2 vier Lagerbehälter 1 abgeben und aufnehmen. Ein Kommissionier-Arbeitsplatz 3 weist vorzugsweise zwei übereinander angeordnete Tische 9 auf, die in einem Regal 25 angeordnet sind. Grundsätzlich sind aber auch weniger oder mehr solche Tische 9 an einem Kommissionier-Arbeitsplatz möglich.

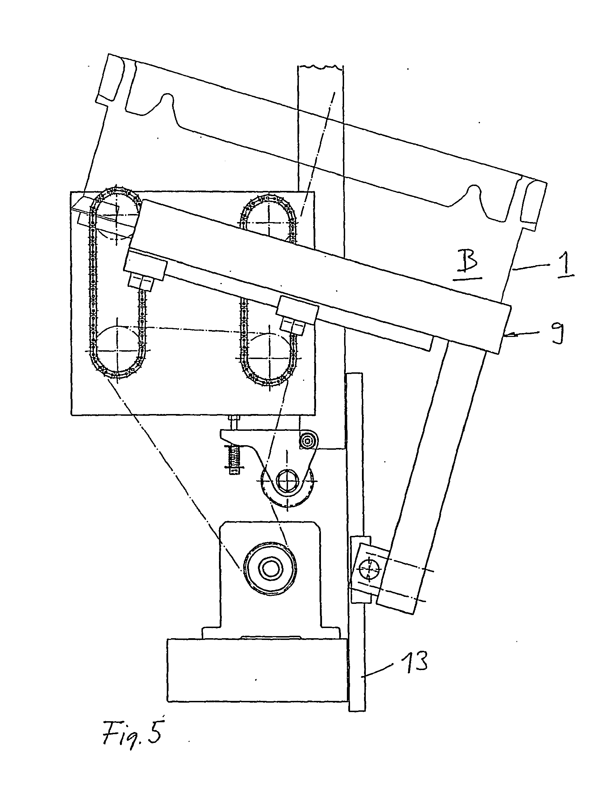

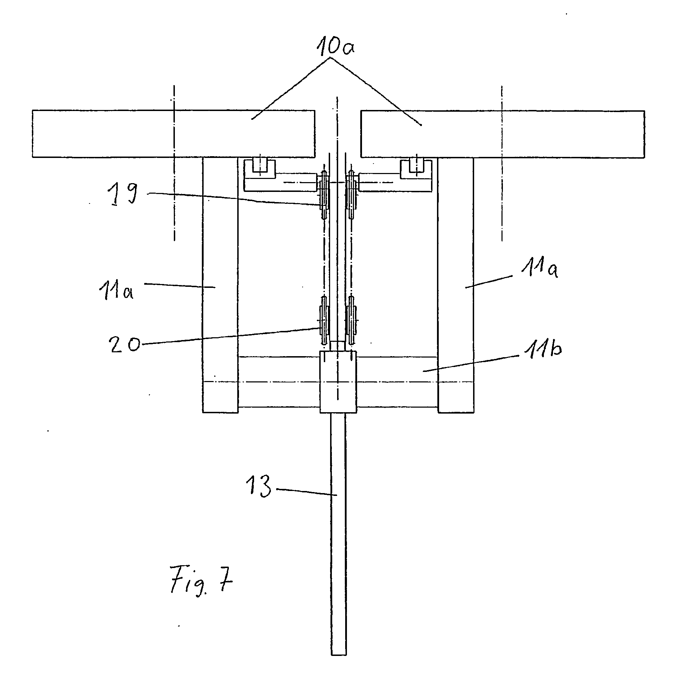

Jeder Tisch 9 weist eine Palette 10 auf, die zwei Aufnahmeplätze 10A für jeweils einen Lagerbehälter 1 aufweist. Diese Palette 10 ist an einem Träger 11 befestigt, der gemäss **Fig. 4** an einem unteren Ende mittels eines Lagers 12 an einer vertikalen Führungsschiene 13 verschieblich gelagert ist. Der Träger 11 besteht gemäss **Fig. 5** aus zwei parallel zueinander angeordneten Profilstangen 11 A sowie einer Traverse 11 B. Zudem weist der Tisch 9 eine an der Unterseite der Palette 10 befestigte Führungsschiene 28 auf, an welcher zwei Befestigungsorgane 21 verschieblich geführt sind. Diese Befestigungsorgane 21 sind jeweils an einem endlosen Antriebsorgan 18 schwenkbar sowie lösbar befestigt. Diese beiden endlosen Antriebsorgane 18 sind beispielsweise Gliederketten und jeweils um ein Rad 19 sowie ein Rad 20 gelegt. Diese Räder 19 und 20 sind an einem Lagerschild 17 gelagert. Der Antrieb erfolgt mit einer Antriebsvorrichtung 27, die ein endloses Antriebsorgan 15 aufweist, das von einem Motor 14 angetrieben und mit einer Spannvorrichtung 16 gespannt ist. Am Lagerschild 17 sind auf der anderen Seite ebenfalls zwei gleiche Antriebsorgane 18 gelagert und an diesen ist jeweils eine Schiene 28 gelagert, so dass sich die in Fig. 7 gezeigte symmetrische Anordnung ergibt. Das Lagerschild 17 und die Führungsschiene 13 sind vorzugsweise am Regal 25 befestigt.

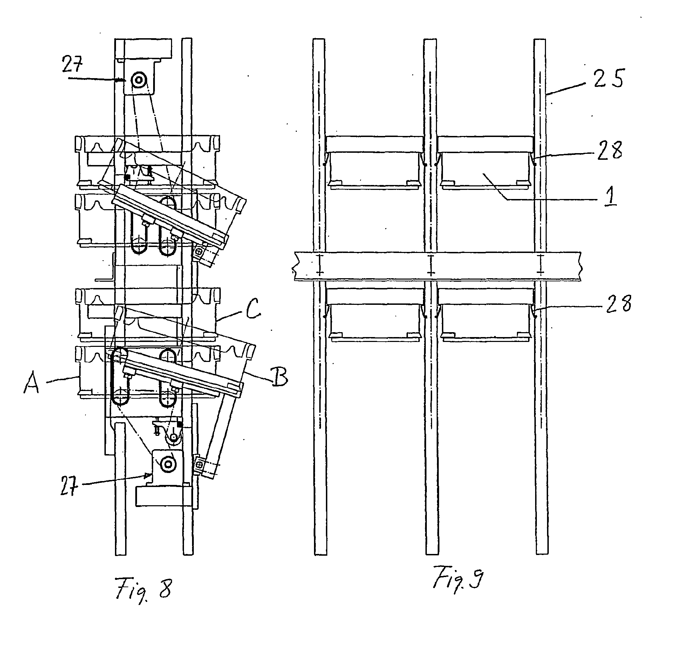

Vorzugsweise sind gemäss **Fig. 8** zwei Tische 9 übereinander angeordnet. Jeder Tisch 9 ist von einer Antriebsvorrichtung 27 angetrieben. Die beiden Antriebsorgane 18 eines Antriebes 27 laufen in gleicher Richtung und synchron zueinander. Die Neigung der Tische 9 ergibt sich durch die entsprechende Befestigung der beiden Befestigungsorgane 21 an den Antriebsorganen 18. Die Befestigungsorgane 21 sind lösbar an den Befestigungsorganen 18 befestigt und können zum Verstellen der Neigung der Tische 9 versetzt werden. Die Befestigungsorgane 21 können somit an einem beliebigen Glied des Antriebsorgans 18 befestigt werden. Bei laufendem Motor 14 ergibt sich folgender Bewegungsablauf der Tische 9:

Auf seiner zyklischen Bahn durchläuft jeder Tisch 9 die in **Fig. 5** gezeigte Position, in welcher die beiden Lagerbehälter 1 geneigt sind. Diese Position bildet die Entnahmeposition B, in welcher der Kommissionierer 7 dem Lagerbehältern 1 die vorgesehenen Artikel entnimmt. In der beschriebenen Ausführung mit zwei Tischen 9, die jeweils zwei Lagerbehälter 1 aufnehmen, werden dem Kommissionierer 7 somit jeweils vier Behälter 1 in ergonomisch günstiger Position präsentiert. Die Neigungen der beiden übereinander angeordneten Tische 9 kann gleich oder unterschiedlich sein wie dies in **Fig. 8** gezeigt ist. Die Neigung des unteren Tisches 9 beträgt beispielsweise 17°, während die Neigung des oberen Tisches etwas grösser ist und beispielsweise 26° beträgt. Die Neigungen sind wie oben erläutert, durch Verstellen der Befestigungsorgane 21 einstellbar. In der geneigten Stellung bleibt der Antrieb während einer vorbestimmten Zeitspanne stehen. Innerhalb dieser Zeitspanne wird kommissioniert. Über einen hier nicht gezeigten Timer kann der Zeitpunkt des Stillstandes eingestellt werden. Erfolgt der Stillstand früher, so ist der Tisch 9 in der Entnahmeposition tiefer angeordnet. Erfolgt er später, so erfolgt der Stillstand entsprechend in einer höheren Position. Mit dem Timer kann somit die Höhe der Tische 9 optimal an die Bedürfnisse des Kommissionierers angepasst werden. Der Kommissionierer 7 kann somit am Timer die ihm zusagenden Höhe der Tische 9 einstellen.

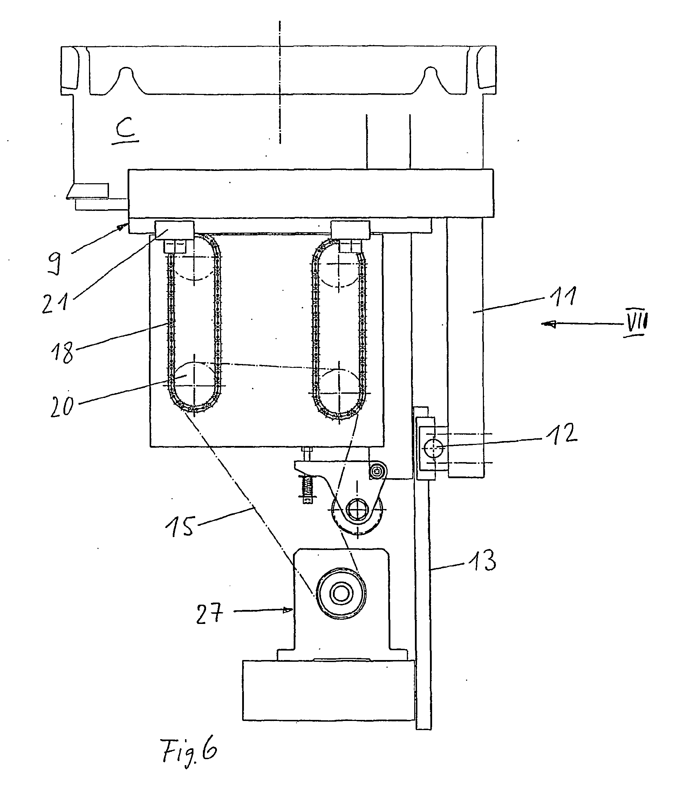

Nach dem Kommissionieren werden die Tische 9 nach oben in die in Fig. 6 gezeigte horizontale Position C bewegt. Die Antriebsorgane 18 laufen hierbei in der Ansicht gemäss **Fig. 5** im Gegenuhrzeigersinn. Ist die obere horizontale Position erreicht, so werden die Behälter 1 jeweils in eine Rücklagerposition gebracht. Hierzu sind gemäss **Fig. 9** am Regal 25 schwenkbare Leisten 28 oder andere geeignete Haltemittel angeordnet, auf welche die Behälter 1 aufgeschoben werden und welche die Behälter 1 am Regal 25 ausziehbar halten. Die Behälter 1 hängen nun somit im Regal 25 bzw. an den Leisten 28 und können vom Fahrzeug 2 entnommen werden. Die Tische 9 bewegen sich nun wieder nach unten, während die kommissionierten Behälter 1 auf den gestellfesten Leisten 28 in der genannten Rücklagerposition am Gestell 25 verbleiben. Während dieser Bewegung der Tische 9 werden die Behälter 1 von einem Fahrzeug 2 in Richtung der Pfeile 29 aus dem Regal 25 horizontal herausgezogen und auf das Fahrzeug 2 geladen. Die Tische 9 haben die in Fig. 4 gezeigte untere Beladeposition A erreicht. In dieser Position werden die beiden Tische 9 insgesamt mit vier Lagerbehältern 1 beladen. Die beiden beladenen Tische 9 werden nun wieder in die in **Fig. 5** gezeigte Entnahmeposition B bewegt. Das Fahrzeug 2 gibt somit während eines Zyklus vier zu kommissionierende Behälter 1 an die Tisch e9 ab und nimmt anschliessend zwei kommissionierte Behälter 1 auf und retourniert diese in Lager 4. Das entladene Fahrzeug 2 wird wieder beladen und zu einem Kommissionier-Arbeitsplatz gefahren. Hiernach wiederholt sich der genannte Zyklus in gleicher Weise. Wie die Fig. 2 zeigt, erfolgt das Beladen der Tische 9 sowie das Beladen des Fahrzeugs 2 mit den kommissionierten Behältern 1 auf den Rückseite des Gestells 25. Der Arbeitsplatz des Kommissioierens 7 ist somit durch diese Beladevorgänge nicht beschränkt.

## Patentansprüche

1. Kommissioniereinrichtung mit einer Transportvorrichtung, welche Lagerbehälter (1) von einem Lager (4) zu einem Kommissionier-Arbeitsplatz (3) und wieder zurück ins Lager (4) transportiert, wobei die zu kommissionierenden Lagerbehälter (1) auf einem verstellbaren Tisch (9) präsentiert werden, **dadurch gekennzeichnet, dass** die Transportvorrichtung wenigstens ein Fahrzeug (2) aufweist, das die Lagerbehälter (1) vom Lager (4) zum Tisch (9) und wieder zurück ins Lager (4) transportiert, und dass der Tisch (9) mittels einer Antriebsvorrichtung (27) zyklisch von einer Beladeposition (A) in eine Entnahmeposition (B) und von dieser in eine Entladeposition (C) bewegt wird, wobei der Tisch (9) in der Beladeposition (A) vom Fahrzeug (2) mit Behältern (1) beladen wird.

2. Einrichtung nach Anspruch 1, **dadurch gekennzeichnet, dass** die Höhe und/oder die Neigung des Tisches (9) verstellbar ist.

3. Einrichtung nach Anspruch 1 oder 2, **dadurch gekennzeichnet, dass** der Tisch (9) in einem Regal (25) angeordnet ist.

4. Einrichtung nach einem der Ansprüche 1 bis 3, **dadurch gekennzeichnet, dass** der Tisch (9) vertikal verschiebbar ist und dass die Entladeposition (C) über der Entnahmeposition (B) und diese über der Beladeposition (A) angeordnet ist.

5. Einrichtung nach einem der Ansprüche 1 bis 4, **dadurch gekennzeichnet, dass** die Behälter (1) in der Entladeposition (C) an jeweils einem Rücklagerplatz am Regal (25) gehalten sind.

6. Einrichtung nach Anspruch 5, **dadurch gekennzeichnet, dass** die Lagerbehälter (1) in der Rücklageposition mit Haltemitteln (28) am Regal (25) ausziehbar gehalten sind.

7. Einrichtung nach einem der Ansprüche 1 bis 6, **dadurch gekennzeichnet, dass** der Tisch (2) an im Abstand zueinander angeordneten endlosen Antriebsorganen (18) befestigt ist.

8. Einrichtung nach Anspruch 7, **dadurch gekennzeichnet, dass** der Tisch (2) an den beiden Antriebsorganen (18) verstellbar befestigt ist.

9. Einrichtung nach Anspruch 7 oder 8, **dadurch gekennzeichnet, dass** die beiden Antriebsorgane (18) Gliederketten oder Zahnriemen sind.

10. Einrichtung nach einem der Ansprüche 1 bis 9, **dadurch gekennzeichnet, dass** der Tisch (9) aus der Sicht des Kommissionierers (7) von hinten beladen und entladen wird.

11. Einrichtung nach einem der Ansprüche 1 bis 10, **dadurch gekennzeichnet, dass** das Fahrzeug (2) so ausgebildet ist, dass es den Kommissionier-Arbeitsplatz (3) jeweils gleichzeitig bedienen kann.

12. Einrichtung nach einem der Ansprüche 1 bis 11, **dadurch gekennzeichnet, dass** der Tisch (9) wenigstens zwei Lagerbehälter (1) aufnimmt.

13. Einrichtung nach einem der Ansprüche 1 bis 12, **dadurch gekennzeichnet, dass** der Kommissionier-Arbeitsplatz (3) wenigstens zwei übereinander angeordnete Tische (9) aufweist.

14. Einrichtung nach Anspruch 13, **dadurch gekennzeichnet, dass** die beiden Tische (9) so gesteuert sind, dass sie im Wesentlichen gleichzeitig in einer Entnahmeposition (B) angeordnet sind.

## Claims

1. An order-picking apparatus with a transporting arrangement which transports the storage containers (1) from a store (4) to an order-picking workstation (3) and back again into the store (4), wherein the storage containers (1) from which orders are to be picked are presented on an adjustable table (9), and the transporting arrangement has at least one vehicle (2) which transports the storage containers (1) from the store (4) to the table (9) and back again into the store (4), wherein the table (9) is moved cyclically, by means of a drive arrangement (27), from a loading position (A) into a removal position (B) and from the latter into an unloading position (C), the table (9), in the loading position (A), being loaded with containers (1) by the vehicle (2).

2. The apparatus as claimed in claim 1, **characterized in that** the height and/or the inclination of the table (9) can be adjusted.

3. The apparatus as claimed in claim 1 or 2, **characterized in that** the table (9) is arranged in a rack (25).

4. The apparatus as claimed in one of claims 1 to 3, **characterized in that** the table (9) can be displaced vertically, and **in that** the unloading position (C) is arranged above the removal position (B), and the latter is arranged above the loading position (A).

5. The apparatus as claimed in one of claims 1 to 4, **characterized in that** the containers (1), in the unloading position (C), are retained on the rack (25) at a return storage location in each case.

6. The apparatus as claimed in claim 5, **characterized in that** the storage containers (1), in the return storage position, are retained in a withdrawable manner on the rack (25) by retaining means (28).

7. The apparatus as claimed in one of claims 1 to 6, **characterized in that** the table (2) is fastened spaced-apart endless drive elements (18).

8. The apparatus as claimed in claim 7, **characterized in that** the table (9) is fastened in an adjustable manner on the two drive elements (18).

9. The apparatus as claimed in claim 7 or 8, **characterized in that** the two drive elements (18) are link chains or toothed belts.

10. The apparatus as claimed in one of claims 1 to 9, **characterized in that** the table (9) is loaded and unloaded from the rear, as seen by the order picker (7).

11. The apparatus as claimed in one of claims 1 to 10, **characterized in that** the vehicle (2) i.s designed such that it can serve the order-picking workstation (3) simultaneously in each case with a plurality of storage containers (1).

12. The apparatus as claimed in one of claims 1 to 11, **characterized in that** the table (9) accommodates at least two storage containers (1).

13. The apparatus as claimed in one of claims 1 to 12, **characterized in that** the order-picking workstation (3) has at least two tables (9) arranged one above the other.

14. The apparatus as claimed in claim 13, **characterized in that** the two tables (9) are controlled such that they are arranged essentially simultaneously in a removable position (B).

## Revendications

1. Appareil de préparation des commandes comprenant un dispositif de transport, qui transporte des récipients de stockage (1) d'un stock (4) à un poste de travail de préparation de commandes (3) puis les ramène au stock (4), les récipients de stockage (1) à préparer étant présentés sur une table déplaçable (9), **caractérisé en ce que** le dispositif de transport présente au moins un véhicule (2) qui transporte les récipients de stockage (1) du stock (4) à la table (9) et qui les ramène au stock (4), et **en ce que** la table (9) est déplacée au moyen d'un dispositif d'entraînement (27) de manière cyclique d'une position de chargement (A) dans une position de prélèvement (B) et est déplacée de celle-ci dans une position de déchargement (C), la table (9) étant chargée de récipients (1) par le véhicule (2) dans la position de chargement (A).

2. Appareil selon la revendication 1, **caractérisé en ce que** la hauteur et/ou l'inclinaison de la table (9) sont réglables.

3. Appareil selon la revendication 1 ou 2, **caractérisé en ce que** la table (9) est disposée dans une étagère (25).

4. Appareil selon l'une quelconque des revendications 1 à 3, **caractérisé en ce que** la table (9) peut être déplacée verticalement et **en ce que** la position de déchargement (C) est disposée au-dessus de la position de prélèvement (B) et celle-ci au-dessus de la position de chargement (A).

5. Appareil selon l'une quelconque des revendications 1 à 4, **caractérisé en ce que** les récipients (1) sont maintenus dans la position de déchargement (C) sur un poste de stockage en arrière sur l'étagère (25).

6. Appareil selon la revendication 5, **caractérisé en ce que** les récipients de stockage (1) sont maintenus de manière à pouvoir être ressortis dans la position en arrière avec des moyens de retenue (28) sur l'étagère (25).

7. Appareil selon l'une quelconque des revendications 1 à 6, **caractérisé en ce que** la table (9) est fixée sur des organes d'entraînement (18) sans fin espacés les uns des autres.

8. Appareil selon la revendication 7, **caractérisé en ce que** la table (9) est fixée de manière déplaçable sur les deux organes d'entraînement (18).

9. Appareil selon la revendication 7 ou 8, **caractérisé en ce que** les deux organes d'entraînement (18) sont des chaînes à maillons ou des courroies dentées.

10. Appareil selon l'une quelconque des revendications 1 à 9, **caractérisé en ce que** la table (9) est chargée et déchargée depuis l'arrière hors de vue du préparateur des commandes (7).

11. Appareil selon l'une quelconque des revendications 1 à 10, **caractérisé en ce que** le véhicule (2) est réalisé de telle sorte qu'il puisse en même temps desservir le poste de travail de préparation des commandes (3).

12. Appareil selon l'une quelconque des revendications 1 à 11, **caractérisé en ce que** la table (9) reçoit au moins deux récipients de stockage (1).

13. Appareil selon l'une quelconque des revendications 1 à 12, **caractérisé en ce que** le poste de travail de préparation des commandes (3) présente au moins deux tables (9) disposées l'une au-dessus de l'autre.

14. Appareil selon la revendication 13, **caractérisé en ce que** les deux tables (9) sont commandées de telle sorte qu'elles soient disposées essentiellement simultanément dans une position de prélèvement (B).
